# EUROPEAN PATENT APPLICATION

(11) **EP 2 290 956 A2**
(43) Date of publication of application: **02.03.2011**
(21) Application number: 10009007.5
(22) Date of filing: 30.08.2010
(51) Int. Cl.: H04N 5/445

(54) **Image display apparatus and method for operating the same**

(30) Priority: 01.09.2009 KR 20090082006
(71) Applicant: LG Electronics Inc., Seoul 150-721 (KR)
(72) Inventor: Yum, Hyungsun, Seoul 137-724 (KR); Ahn, Yongki, Seoul 137-724 (KR); Cho, Suyeon, Seoul 137-724 (KR)
(74) Representative: Katérle, Axel

(57) **Abstract**

An image display apparatus and a method for operating the same are disclosed. The image display apparatus includes a display for displaying a selected screen, a tuner unit for receiving a broadcast signal of a selected channel or broadcast signals of previously stored channels, and a controller for, upon receipt of a number input, controlling display of a screen on the display, the screen including a list of channel numbers each including the input number among channel numbers of the previously stored channels on which the broadcast signals are received, and thumbnail images of channels having the channel numbers.

## Description

### CROSS-REFERENCE TO RELATED APPLICATION

This application claims the benefit of Korean Application No. 10-2009-0082006, filed on September 1, 2009 in the Korean Intellectual Property Office, the disclosure of which is incorporated herein by reference.

### BACKGROUND OF THE INVENTION

### 1. Field of the invention

The present invention relates to an image display apparatus and a method for operating the same, and more particularly, to an image display apparatus and a method for operating the same, which enable a user to readily identify broadcast videos of received channels.

### 2. Description of the Related Art

An image display apparatus has a function of displaying images to a user. The image display apparatus can display a broadcast program selected by the user on a display from among broadcast programs transmitted from broadcasting stations. The recent trend in broadcasting is a worldwide shift from analog broadcasting to digital broadcasting.

As it transmits digital audio and video signals, digital broadcasting offers many advantages over analog broadcasting, such as robustness against noise, less data loss, ease of error correction, and the ability to provide high-definition, clear images. Digital broadcasting also allows interactive viewer services.

However, as broadcast channels increase in number to meet various user demands, it becomes more difficult for viewers to determine what programs they are watching as they switch through channels. Therefore, much time is taken to select a channel.

### SUMMARY OF THE INVENTION

Therefore, the present invention has been made in view of the above problems, and it is an object of the present invention to provide an image display apparatus and a method for operating the same, which enable a user to readily identify broadcast videos of received channels.

In accordance with an aspect of the present invention, the above and other objects can be accomplished by the provision of a method for operating an image display apparatus, including displaying a selected screen on a display, and displaying, upon receipt of a number input, a screen including a list of channel numbers each including the input number and thumbnail images of channels having the channel numbers on the display. Or upon receipt of a channel number display command, a channel number list is displayed along with thumbnail images of channels having channel numbers included in the channel number list.

In accordance with another aspect of the present invention, there is provided an image display apparatus including a display for displaying a selected screen, a tuner unit for receiving a broadcast signal of a selected channel or broadcast signals of previously stored channels, and a controller for, upon receipt of a number input, controlling display of a screen on the display, the screen including a list of channel numbers each including the input number among channel numbers of the previously stored channels on which the broadcast signals are received, and thumbnail images of channels having the channel numbers.

### BRIEF DESCRIPTION OF THE DRAWINGS

The above and other objects, features and other advantages of the present invention will be more clearly understood from the following detailed description taken in conjunction with the accompanying drawings, in which:
FIG. 1 is a block diagram of an image display system according to an exemplary embodiment of the present invention;
FIG. 2 is a block diagram of a channel browsing processor illustrated in FIG. 1;
FIGS. 3a and 3b are diagrams illustrating examples of a remote controller illustrated in FIG. 1;
FIG. 4 is a block diagram of a user Input/Output (I/O) unit in an interface illustrated in FIG. 1 and a pointing device illustrated in FIG. 3;
FIG. 5 is a flowchart illustrating a method for operating the image display apparatus according to an exemplary embodiment of the present invention; and
FIGS. 6 to 9 illustrate various examples of screens displayed on a display in the method for operating the image display apparatus according to the exemplary embodiment of the present invention.

### DETAILED DESCRIPTION OF THE PREFERRED EMBODIMENTS

Exemplary embodiments of the present invention will be described below with reference to the attached drawings.

The terms "module" and "unit" used to signify components are used herein to help the understanding of the components and thus they should not be considered as having specific meanings or roles. Accordingly, the terms "module" and "unit" may be used interchangeably.

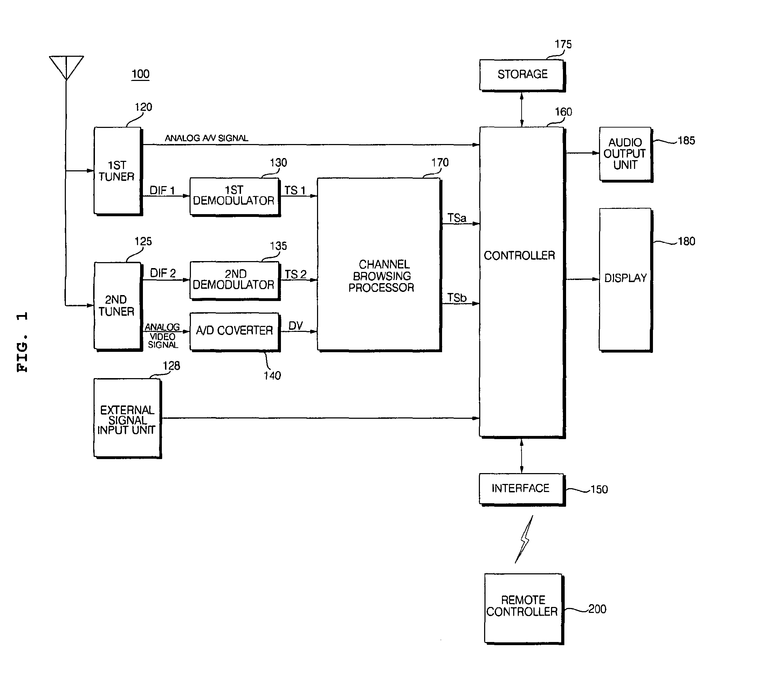

FIG. 1 is a block diagram of an image display apparatus according to an exemplary embodiment of the present invention.

Referring to FIG. 1, an image display apparatus 100 according to an exemplary embodiment of the present invention includes a first tuner 120, a second tuner 125, an external signal input unit 128, a first demodulator 130, a second demodulator 135, an Analog-to-Digital (A/D) converter 140, an interface 150, a controller 160, a channel browsing processor 170, a storage 175, a display 180, and an audio output unit 185.

The first tuner 120 selects a Radio Frequency (RF) broadcast signal corresponding to a channel selected by a user from among a plurality of RF broadcast signals received through an antenna and downconverts the selected RF broadcast signal into a digital Intermediate Frequency (IF) signal or an analog baseband Audio/Video (A/V) signal. More specifically, if the selected RF broadcast signal is a digital broadcast signal, the first tuner 120 downconverts the selected RF broadcast signal into a digital IF signal, DIF 1. On the other hand, if the selected RF broadcast signal is an analog broadcast signal, the first tuner 120 downconverts the selected RF broadcast signal into an analog baseband A/V signal, CVBS 1/SIF. That is, the first tuner 120 may be a hybrid tuner capable of processing not only digital broadcast signals but also analog broadcast signals. The analog baseband A/V signal CVBS1/SIF may be directly input to the controller 160.

The first tuner 120 may be capable of receiving RF broadcast signals from an Advanced Television Systems Committee (ATSC) single-carrier system or from a Digital Video Broadcasting (DVB) multi-carrier system, as described later.

The second tuner 125, like the first tuner 120, selects the RF broadcast signal corresponding to the channel selected by the user from among the plurality of RF broadcast signals received through the antenna, and downconverts the selected RF broadcast signal into a second digital IF signal, DIF 2 or an analog baseband A/V signal.

In addition, the second tuner 125 may sequentially or periodically select a number of RF broadcast signals corresponding to all broadcast channels previously added to the image display apparatus 100 by a channel add function from a plurality of RF signals received through the antenna, and may downconvert the selected RF broadcast signals into IF signals or baseband A/V signals. In an exemplary embodiment, one or more video frames acquired from each of the previously-added channels may be displayed on at least a part of the display 180 as a thumbnail image. Thus, it is possible to receive the RF broadcast signals corresponding to all of the previously-added channels sequentially or periodically.

For example, the first tuner 120 may downconvert a main RF broadcast signal selected by the user into an IF signal or a baseband A/V signal, and the second tuner 125 may sequentially or periodically select all RF broadcast signals or all other RF broadcast signals (i.e., sub-RF broadcast signals) except for the main RF broadcast signal and downconvert the selected RF broadcast signals into IF signals or baseband A/V signals.

The first demodulator 130 receives the first digital IF signal DIF 1 from the first tuner 120 and demodulates the first digital IF signal DIF 1.

For example, if the first digital IF signal DIF 1 is an ATSC signal, the first demodulator 130 may perform 8-Vestigal SideBand (VSB) demodulation on the first digital IF signal DIF 1. The first demodulator 130 may also perform channel decoding. For channel decoding, the first demodulator 130 may include a Trellis decoder (not shown), a de-interleaver (not shown) and a Reed-Solomon decoder (not shown) so as to perform Trellis decoding, de-interleaving and Reed-Solomon decoding.

For example, if the first digital IF signal DIF 1 is a DVB signal, the first demodulator 130 performs Coded Orthogonal Frequency Division Multiple Access (COFDMA) demodulation on the first digital IF signal DIF 1. The first demodulator 130 may also perform channel decoding. For channel decoding, the first demodulator 130 may include a convolution decoder (not shown), a de-interleaver (not shown), and a Reed-Solomon decoder (not shown) so as to perform convolution decoding, de-interleaving, and Reed-Solomon decoding.

The external signal input unit 128 receives signals from an external device. For reception of the external input signals, the external signal input unit 128 may include an A/V Input/Output (I/O) unit (not shown) and a wireless communication module (not shown).

The external signal input unit 128 is connected to an external device such as a Digital Versatile Disc (DVD) player, a Bluray player, a game console, a camcorder, or a computer (e.g., a laptop computer). Then, the external signal input unit 128 externally receives video, audio, and/or data signals from the external device and transmits the received external input signals to the controller 160. In addition, the external signal input unit 128 may output video, audio, and data signals processed by the controller 160 to the external device.

In order to receive or transmit A/V signals from or to the external device, the A/V I/O unit of the external signal input unit 128 may include an Ethernet port, a Universal Serial Bus (USB) port, a Composite Video Banking Sync (CVBS) port, a Component port, a Super-video (S-video) (analog) port, a Digital Visual Interface (DVI) port, a High-Definition Multimedia Interface (HDMI) port, a Red-Green-Blue (RGB) port, a D-sub port, an Institute of Electrical and Electronics Engineers (IEEE)-1394 port, a Sony/Philips Digital Interconnect Format (S/PDIF) port, and a LiquidHD port.

Various input signals received through the external signal input unit 128 may be input to the channel browsing processor 170 and subjected to a channel browsing operation performed by the channel browsing processor 170 for extracting a number of thumbnail images. For example, analog signals received through the CVBS port and the S-video port may be converted into digital signals by the A/D converter 140 and then input to the channel browsing processor 170. Digital signals received through the Ethernet port, the USB port, the component port, the DVI port, the HDMI port, the RGB port, the D-sub port, the IEEE-1394 port, the S/PDIF port and the LiquidHD port may be directly input to the channel browsing processor 170 without A/D conversion. A digital signal output from the external signal input unit 128 may be a stream signal, for example, an MPEG-2 Transport Stream (TS) in which an MPEG-2 video signal and a Dolby AC-3 audio signal are multiplexed.

The wireless communication module of the external signal input unit 128 may wirelessly access the Internet. For the wireless Internet access, the wireless communication module may use a Wireless Local Area Network (WLAN) (i.e., Wi-Fi), Wireless Broadband (Wibro), World Interoperability for Microwave Access (WiMax), and High Speed Downlink Packet Access (HSDPA).

In addition, the wireless communication module may perform short-range wireless communication with other electronic devices. For the short-range wireless communication, the wireless communication module may use Bluetooth, Radio-Frequency IDentification (RFID), Infrared Data Association (IrDA), Ultra WideBand (UWB), and ZigBee.

The external signal input unit 128 may be connected to various set-top boxes through at least one of the Ethernet port, the USB port, the CVBS port, the Component port, the S-video port, the DVI port, the HDMI port, the RGB port, the D-sub port, the IEEE-1394 port, the S/PDIF port, and the LiquidHD port and may thus receive data from or transmit data to the various set-top boxes. For example, when connected to an Internet Protocol Television (IPTV) set-top box, the external signal input unit 128 may transmit video, audio and data signals processed by the IPTV set-top box to the controller 160 and may transmit various signals received from the controller 160 to the IPTV set-top box. In addition, video, audio and data signals processed by the IPTV set-top box may be processed by the channel browsing processor 170 and then the controller 160.

The term 'IPTV' as used herein covers a broad range of services, depending on transmission networks, such as ADSL-TV, VDSL-TV, FTTH-TV, TV over DSL, Video over DSL, TV over IP (TVIP), Broadband TV (BTV), Internet TV and fullbrowsing TV, which are capable of providing Internet access services.

The first demodulator 130 may perform demodulation and channel decoding on the first digital IF signal DIF 1 received from the first tuner 120, thereby obtaining a first stream signal TS 1. The first stream signal TS 1 may be a signal in which a video signal, an audio signal and a data signal are multiplexed. For example, the first stream signal TS 1 may be an MPEG-2 TS signal obtained by multiplexing an MPEG-2 video signal and a Dolby AC-3 audio signal. An MPEG-2 TS may include a 4-byte header and a 184-byte payload.

The first stream signal TS 1 is input to the controller 160 and is thus subjected to demultiplexing and signal processing. In this exemplary embodiment, the first stream signal TS 1 is input to the channel browsing processor 170 and is thus subjected to a channel browsing operation prior to input to the controller 160. The channel browsing operation will be described later in great detail.

In order to properly handle not only ATSC signals but also DVB signals, the first demodulator 130 may include an ATSC demodulator and a DVB demodulator.

The second demodulator 135 receives the second digital IF signal DIF 2 from the second tuner 125 and demodulates the second digital IF signal DIF 2, thereby generating a second stream signal TS 2. The operation of the second demodulator 135 is almost the same as the operation of the first demodulator 130.

An analog baseband video signal CVBS 2 output from the second tuner 125 needs to be converted into a digital signal by the A/D converter 140.

The A/D converter 140 converts a received analog signal into a digital signal. If the received analog signal is a video signal, the A/D converter 140 performs sampling and quantization on the analog signal, thereby obtaining the digital video signal DV. The digital video signal DV may be a signal that has yet to be encoded. The digital video signal DV is provided to the channel browsing processor 170, for processing.

The interface 150 transmits a signal received from the user to the controller 160 or transmits a signal received from the controller 160 to the user. For example, the interface 150 may receive various user input signals such as a power-on/off signal, a channel selection signal, and a screen setting signal from a remote controller 200 or may transmit a signal received from the controller 160 to the remote controller 200.

The controller 160 may demultiplex an input stream signal into a number of signals and process the demultiplexed signals so that the processed signals can be output as A/V data. The controller 160 may provide overall control to the image display apparatus 100.

The controller 160 may include a demultiplexer (not shown), a video processor (not shown), an audio processor (not shown), and a user input processor (not shown).

The controller 160 may demultiplex an input stream signal, e.g. an MPEG-2 TS signal, into a video signal, an audio signal and a data signal.

Thereafter, the controller 160 may process the video signal. For example, if the video signal is an encoded signal, the controller 160 may decode the video signal. More specifically, if the video signal is an MPEG-2 encoded signal, the controller 160 may decode the video signal by MPEG-2 decoding. On the other hand, if the video signal is an H.264-encoded DMB or DVB-handheld (DVB-H) signal, the controller 160 may decode the video signal by H.264 decoding.

In addition, the controller 160 may adjust the brightness, tint and color of the video signal.

The video signal processed by the controller 160 is displayed on the display 180. Alternatively or additionally, the video signal processed by the controller 160 may be output to an external output port connected to an external output device.

The controller 160 may process the audio signal obtained by demultiplexing the input stream signal. For example, if the audio signal is an encoded signal, the controller 160 may decode the audio signal. More specifically, if the audio signal is an MPEG-2 encoded signal, the controller 160 may decode the audio signal by MPEG-2 decoding. On the other hand, if the audio signal is an MPEG-4 Bit Sliced Arithmetic Coding (BSAC)-encoded terrestrial DMB signal, the controller 160 may decode the audio signal by MPEG-4 decoding. If the audio signal is an MPEG-2 Advanced Audio Coding (AAC)-encoded DMB or DVB-H signal, the controller 180 may decode the audio signal by AAC decoding.

In addition, the controller 160 may adjust the bass, treble or volume of the audio signal.

The audio signal processed by the controller 160 is output to the audio output unit 185, e.g., a speaker. Alternatively or additionally, the audio signal processed by the controller 160 may be output to an external output port connected to an external output device.

The controller 160 may process the data signal obtained by demultiplexing the input stream signal. For example, if the data signal is an encoded signal such as an Electronic Program Guide (EPG), which provides broadcast information (e.g. start time and end time) about programs played on each channel, the controller 160 may decode the data signal. Examples of an EPG include ATSC-Program and System Information Protocol (ATSC-PSIP) information and DVB-Service Information (DVB-SI). ATSC-PSIP information or DVB-SI may be included in the header of a TS, i.e., the 4-byte header of an MPEG-2 TS.

The controller 160 may perform On-Screen Display (OSD) processing. More specifically, the controller 160 may generate an OSD signal for displaying various information on the display 180 as graphic or text data based on a user input signal received from the remote controller 200 and at least one of a processed video signal and a processed data signal. The OSD signal may be input to the display 180 along with the processed video and data signals.

The OSD signal may include various data such as a User-Interface (UI) screen, various menu screens, widgets, and icons for the image display apparatus 100.

The channel browsing processor 170 enables channel browsing of at least one of a plurality of broadcast signals corresponding to a plurality of received channels, various input image signals received from the external signal input unit 128, or both. More specifically, the channel browsing processor 170 may receive the first or second stream signal TS 1 or TS 2 from the first or second demodulator 130 or 135, a stream signal from the external signal input unit 128, or the digital signal DV from the A/D converter 140, demultiplex the first or second stream signal TS 1 or TS 2, and extract some of the frames of a video signal obtained through demultiplexing. Thereafter, the channel browsing processor 170 may generate a new TS signal, i.e., a sub-stream signal TSa, by multiplexing a video signal including the extracted video frames. For example, the sub-stream signal TSa and a main-stream signal TSb may both be MPEG-2 TS signals.

The channel browsing processor 170 may output the main-stream signal TSb, which corresponds to a main video signal to be displayed in a main region of the display 180, without any processing. On the other hand, the channel browsing processor 170 may perform channel browsing on a sub-video signal, which is to be displayed in a sub-region of the display 180, thereby obtaining the sub-stream signal TSa.

In this exemplary embodiment, the channel browsing processor 170 may extract some of the video frames of each of a plurality of broadcast signals received through a plurality of channels and re-encode the extracted video frames into a TS, thereby displaying a list of the channels on the display 180. Since the extracted video frames are displayed on the display 180 as thumbnail images, the user can readily identify the contents of broadcast programs received through the plurality of channels.

Likewise, the channel browsing processor 170 may extract some of the video frames of each of various external input signals received from the external signal input unit 128 and re-encode the extracted video frames into a stream, thereby displaying an external input image list on the display 180. In this manner, a list of a plurality of external input image signals received from a plurality of external input devices may be displayed on the display 180 as thumbnail images. Therefore, the user can readily identify the external input signals received from the external input devices based on the external input image list.

Also, the channel browsing processor 170 may extract some of the video frames of each of a plurality of broadcast signals received through a plurality of channels and some of the video frames of each of various external input signals received from the external signal input unit 128 and re-encode the extracted video frames into TSs, thereby displaying a channel list and an external input image list on the display 180. Since the extracted video frames are displayed on the display 180 as thumbnail images, the user can readily identify the contents of broadcast programs received through the plurality of channels and the external input signals received from the external input devices.

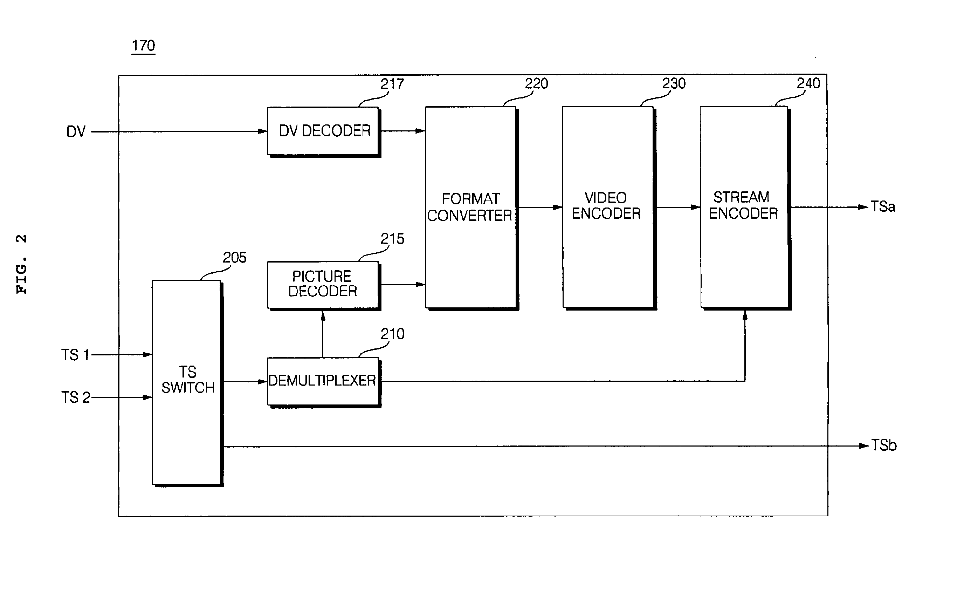

The structure and operation of the channel browsing processor 170 will be described later in further detail with reference to FIG. 2.

The storage 175 may store various programs for processing and controlling signals of the controller 160, and may also store processed video, audio and data signals.

The storage 175 may temporarily store a video, audio or data signal received from the external signal input unit 128.

The storage 175 may store broadcast channels identified through the channel add function.

The storage 175 may include, for example, at least one of a flash memory-type storage medium, a hard disk-type storage medium, a multimedia card micro-type storage medium, a card-type memory, a Random Access Memory (RAM), or a Read-Only Memory (ROM) such as an Electrically Erasable Programmable ROM (EEPROM).

While the storage 175 is shown in FIG. 1 as configured separately from the controller 160, to which the present invention is not limited, the storage 175 may be incorporated into the controller 160, for example.

The image display apparatus 100 may play a file (such as a moving picture file, a still image file, a music file, or a text file) stored in the storage 175 to the user.

The display 180 may convert a processed video signal, a processed data signal, and an OSD signal received from the controller 160 or a video signal and a data signal received from the external signal input unit 128 into RGB signals, thereby generating driving signals. The display 180 may be various types of displays such as a Plasma Display Panel (PDP), a Liquid Crystal Display (LCD), an Organic Light-Emitting Diode (OLED) display, a flexible display, and a three-dimensional (3D) display. The display 180 may also be a touch screen that can be used not only as an output device but also as an input device.

The audio output unit 185 may receive a processed audio signal (e.g., a stereo signal, a 3.1-channel signal or a 5.1-channel signal) from the controller 160 and output the received audio signal as voice. The audio output unit 185 may be various types of speakers.

The remote controller 200 transmits a user input to the interface 150. For the transmission of a user input, the remote controller 200 may use various communication techniques such as Bluetooth, RF, IR, UWB and ZigBee.

In addition, the remote controller 200 may receive a video signal, an audio signal and a data signal from the interface 150 and output the received signals.

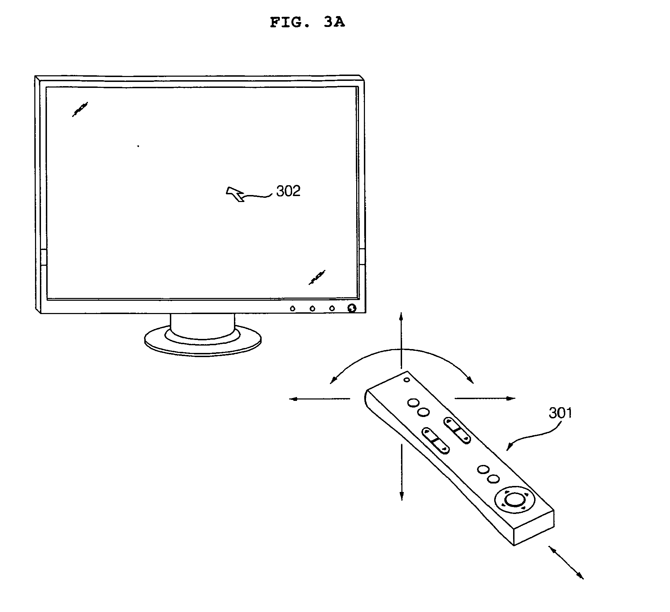

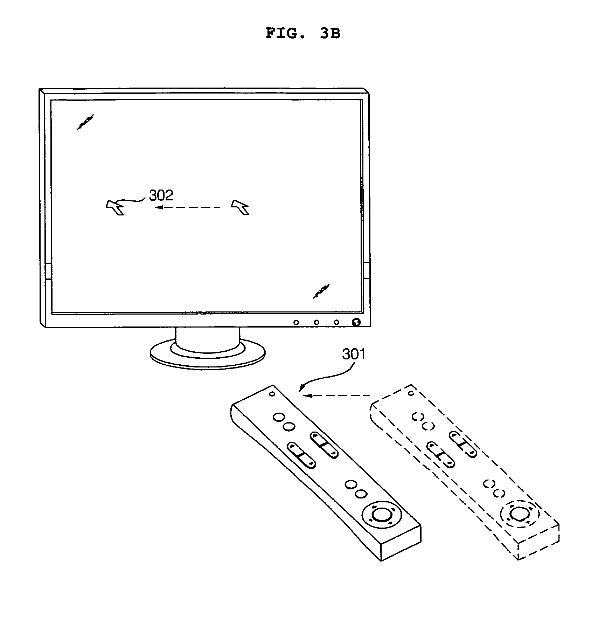

The remote controller 200 may be a pointing device. A pointing device will be described in greater detail with reference to FIG. 3.

While two tuners are shown in FIG. 1 to display a channel list with thumbnail images according to the exemplary embodiment of the present invention, to which the present invention is not limited, the exemplary embodiment of the present invention may be implemented by use of a single tuner.

For example, when a channel list display command is issued while a broadcast channel is being received on a selected channel, the single tuner may sequentially or periodically receive broadcast signals on all broadcast channels preliminarily stored in the storage 175 by the channel add function. The channel list may be displayed in a full-view mode.

The image display apparatus 100 may be a fixed digital broadcast receiver capable of receiving at least one of ATSC (8-VSB) broadcast programs, DVB-T (COFDM) broadcast programs, and ISDB-T (BST-OFDM) broadcast programs or may be a mobile digital broadcast receiver capable of receiving at least one of terrestrial DMB broadcast programs, satellite DMB broadcast programs, ATSC-M/H broadcast programs, DVB-H (COFDM) broadcast programs, and Media Forward Link Only (MediaFLO) broadcast programs. Alternatively or additionally, the image display apparatus 100 may be a digital broadcast receiver capable of receiving cable broadcast programs, satellite broadcast programs or IPTV programs.

Examples of the image display apparatus 100 include a TV receiver, a mobile phone, a smart phone, a laptop computer, a digital broadcasting receiver, a Personal Digital Assistant (PDA) and a Portable Multimedia Player (PMP).

FIG. 2 is a block diagram of the channel browsing processor 170 illustrated in FIG. 1.

Referring to FIG. 2, the channel browsing processor 170 may include a TS switch 205, a demultiplexer 210, a picture decoder 215, a DV decoder 217, a format converter 220, an image encoder 230 and a stream encoder 240.

The TS switch 205 selects one of the first and second stream signals TS 1 and TS 2, outputs the selected stream signal as the main-stream signal TSb without processing, and transmits the other stream signal to the demultiplexer 210 as a sub-stream signal. The main-stream signal, which corresponds to a main video signal, may be displayed on almost the entirety of the display 180. The sub-stream signal, which corresponds to a sub-video signal, may be displayed only on a certain part of the display 180.

In this manner, a channel list, an external input image list, or both may be displayed in a compact-view mode in a certain area on the display 180.

The demultiplexer 210 may demultiplex the first or second stream signal TS 1 or TS 2 into a video signal, an audio signal and a data signal, output the video signal to the picture decoder 215, and output the audio signal and the data signal to the stream encoder 240 in order for the stream encoder 240 to generate a new stream signal.

The picture decoder 215 decodes at least some of the frames of the received video signal by MPEG-2 decoding, MPEG-4 decoding or H.264 decoding. The decoded frames may be still images or moving pictures. For example, the picture decoder 215 may decode an Intra-coded (I) frame or some section of the received video signal.

The DV decoder 217 receives the digital signal DV from the A/D converter 140 and acquires a digital image from the digital signal DV.

The format converter 220 converts the format of a video signal received from the picture decoder 215 or the DV decoder 217. For example, the format converter 220 may change the size (or resolution) of the input image signal. The size change depends on the number of thumbnail images in a thumbnail list displayed on the display 180. For example, as the number of thumbnail images increases, the size of the thumbnail images may be decreased.

The format converter 220 may scale the input image signal to a different size according to whether the input image signal is to be displayed in a compact-view mode or in a full-view mode. The size of thumbnail images displayed in the full-view mode may be greater than the size of thumbnail images displayed in the compact-view mode. A channel list, an external input image list, or both may be displayed on the display 180 either in the compact-view mode or in the full-view mode.

The image encoder 230 may encode the image signal received from the format converter 220 by JPEG coding or MPEG-2 coding. Still images or moving pictures encoded by the image encoder 230 may be displayed on the display 180 as thumbnail images.

The stream encoder 230 may re-encode or multiplex an encoded video signal received from the image encoder 230 and the audio and data signals obtained by the demultiplexing performed in the demultiplexer 210 into a stream, for example, an MPEG-2 TS.

In this exemplary embodiment, the channel browsing processor 170 extracts some of the video frames of each of a plurality of broadcast signals and a plurality of external input signals and re-encodes the extracted video frames. Then, the re-encoded images may be displayed on the display 180 as thumbnail images in response to a user input requesting the display of a channel list or an external input image list. In this manner, the user can readily identify the contents of broadcast programs received from various channels or external input signals provided by various external input devices.

FIGS. 3a and 3b illustrate examples of the remote controller 200 illustrated in FIG. 1.

Referring to FIGS. 3a and 3b, the remote controller 200 may be a pointing device 301 for inputting commands to the image display apparatus 100. In operation, the pointing device 301 transmits or receives RF signals to or from the image display apparatus 100 according to an RF communication standard. As illustrated in FIG. 3a, a pointer 302 representing the movement of the pointing device 301 may be displayed on the image display apparatus 100.

A user may move the pointing device 301 up and down, back and forth, and side to side or may rotate the pointing device 301. The pointer 302 moves in accordance with the movement of the pointing device 301, as illustrated in FIG. 3B.

Referring to FIG. 3a, if the user moves the pointing device 301 to the left, the pointer 302 moves to the left accordingly. The pointing device 301 includes a sensor capable of detecting motion. The sensor of the pointing device 301 detects the movement of the pointing device 301 and transmits motion information corresponding to the result of the detection to the image display apparatus 100. Then, the image display apparatus 100 determines the movement of the pointing device 301 based on the motion information received from the pointing device 301, and calculates the coordinates of a target point to which the pointer 302 should be shifted in accordance with the movement of the pointing device 301 based on the result of the determination.

Referring to FIGS. 3a and 3b, the pointer 302 moves according to whether the pointing device 301 moves vertically or horizontally or rotates. The moving speed and direction of the pointer 302 may correspond to the moving speed and direction of the pointing device 301.

In this exemplary embodiment, the pointer 302 moves in accordance with the movement of the pointing device 301. Alternatively or additionally, an operation command may be input to the image display apparatus 100 in response to the movement of the pointing device 301. That is, as the pointing device 301 moves back and forth, an image displayed on the image display apparatus 100 may be enlarged or reduced. Accordingly, this exemplary embodiment of the present invention does not limit the scope and spirit of the present invention.

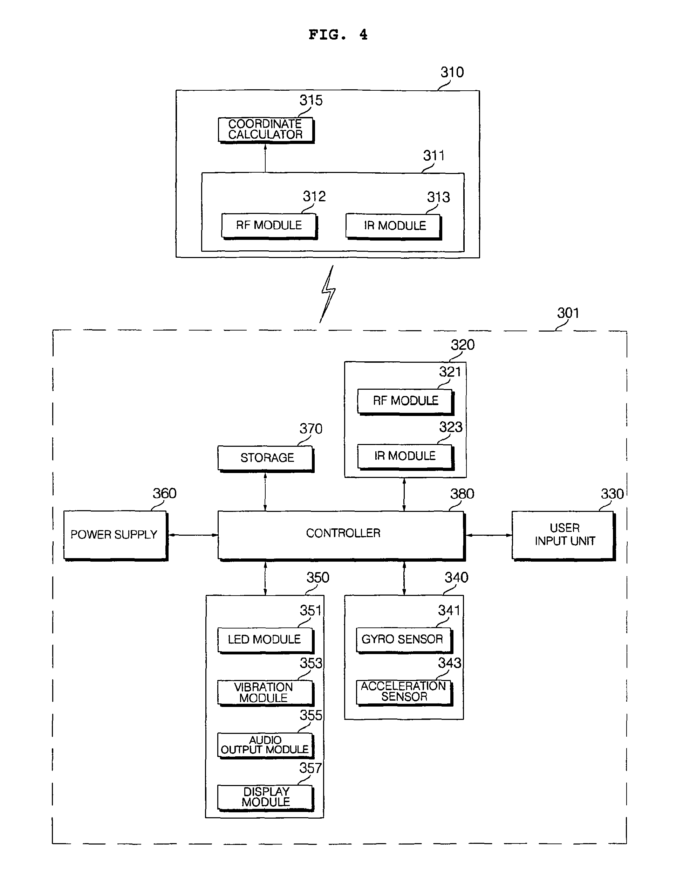

FIG. 4 is a detailed block diagram of the pointing device 301 illustrated in FIG. 3 and the interface 150 illustrated in FIG. 1.

Referring to FIG. 4, the pointing device 301 may include a wireless communication module 320, a user input unit 330, a sensor unit 340, an output unit 350, a power supply 360, a memory 370, and a controller 380.

The wireless communication module 320 may transmit signals to and/or receive signals from the image display apparatus 100. The wireless communication module 320 may include an RF module 321 for transmitting RF signals to and/or receiving RF signals from the interface 310 of the image display apparatus 100 according to an RF communication standard. The wireless communication module 320 may also include an InfraRed (IR) module 323 for transmitting IR signals to and/or receiving IR signals from the interface 310 of the image display apparatus 100 according to an IR communication standard.

The pointing device 301 transmits motion information regarding the movement of the pointing device 301 to the image display apparatus 100 through the RF module 321 in this exemplary embodiment. The pointing device 301 may also receive signals from the image display apparatus 100 through the RF module 321. The pointing device 301 may transmit commands, such as a power on/off command, a channel switching command, or a sound volume change command, to the image display apparatus 100 through the IR module 323, as needed.

The user input unit 330 may include a keypad and/or a plurality of buttons. The user may enter commands to the image display apparatus 100 by manipulating the user input unit 330. If the user input unit 330 includes a plurality of hard-key buttons, the user may input various commands to the image display, apparatus 100 by pressing the hard-key buttons. Alternatively or additionally, if the user input unit 330 includes a touch screen displaying a plurality of soft keys, the user may input various commands to the image display apparatus 100 by touching the soft keys. The user input unit 330 may also include various input tools other than those set forth herein, such as a scroll key and/or a jog key, which should not be construed as limiting the present invention.

The sensor unit 340 may include a gyro sensor 341 and/or an acceleration sensor 343. The gyro sensor 341 may sense the movement of the pointing device 301, for example, in X-, Y-, and Z-axis directions, and the acceleration sensor 343 may sense the moving speed of the pointing device 301.

The output unit 350 may output a video and/or audio signal corresponding to a manipulation of the user input unit 330 or a signal transmitted by the image display apparatus 100. The user may easily identify whether the user input unit 330 has been manipulated or whether the image display apparatus 100 has been controlled based on the video and/or audio signal output by the output unit 350.

The output unit 350 may include a Light Emitting Diode (LED) module 351 which is turned on or off whenever the user input unit 330 is manipulated or whenever a signal is received from or transmitted to the image display apparatus 100 through the wireless communication module 320, a vibration module 353 which generates vibrations, an audio output module 355 which outputs audio data, and a display module 357 which outputs video data.

The power supply 360 supplies power to the pointing device 301. If the pointing device 301 is kept stationary for a predetermined time or longer, the power supply 360 may, for example, reduce or cut off supply of power to the pointing device 301 in order to save power. The power supply 360 may resume supply of power if a specific key on the pointing device 301 is manipulated.

The memory 370 may store various application data for controlling or operating the pointing device 301. The pointing device 301 may wirelessly transmit signals to and/or receive signals from the image display apparatus 100 in a predetermined frequency band through the RF module 321. The controller 380 of the pointing device 301 may store information regarding the frequency band used for the pointing device 301 to wirelessly transmit signals to and/or wirelessly receive signals from the paired image display apparatus 100 in the memory 370 and may then refer to this information for use at a later time.

The controller 380 provides overall control to the pointing device 301. For example, the controller 380 may transmit a signal corresponding to a key manipulation detected from the user input unit 330 or a signal corresponding to motion of the pointing device 301, as sensed by the sensor unit 340, to the interface 310 of the image display apparatus 100.

The interface 310 may include a wireless communication module 311 which wirelessly transmits signals to and/or wirelessly receives signals from the pointing device 301, and a coordinate calculator 315 which calculates a pair of coordinates representing the position of the pointer 302 on the display screen, which is to be moved in accordance with the movement of the pointing device 301.

The wireless communication module 311 includes an RF module 312 and an IR module 313. The RF module 312 may wirelessly transmit RF signals to and/or wirelessly receive RF signals from the RF module 321 of the pointing device 301. The IR module 313 may wirelessly receive IR signals from the IR module 321 of the pointing device 301 according to the IR communication standard.

The coordinate calculator 315 may receive motion information regarding the movement of the pointing device 301 from the wireless communication module 320 of the pointing device 301 and may calculate a pair of coordinates (x, y) representing the position of the pointer 302 on a screen of the display 180 by correcting the motion information for possible errors such as user hand tremor.

A signal received in the image display apparatus 100 from the pointing device 301 through the interface 310 may be transmitted to the controller 160. Then, the controller 160 may acquire information regarding the movement of the pointing device 301 and information regarding a key manipulation detected from the pointing device 301 from the signal received from the interface 150, and may control the image display apparatus 100 based on the acquired information.

The image display apparatus 100, the remote controller 200, and the pointing device 301 being a kind of the remote controller 200 are shown in FIGS. 1 to 4 as having a number of components in a given configuration. However, the image display apparatus 100, the remote controller 200, and/or the pointing device 301 may include fewer components or more components than those shown in FIGS. 1, 2 and 3 in alternative embodiments. Also, two or more components of the image display apparatus 100, the remote controller 200, and/or the pointing device 301 may be combined into a single component or a single component thereof may be separated into two more components in alternative embodiments. The functions of the components of the image display apparatus 100, the remote controller 200, and the pointing device 301 as set forth herein are illustrative in nature and may be modified, for example, to meet the requirements of a given application.

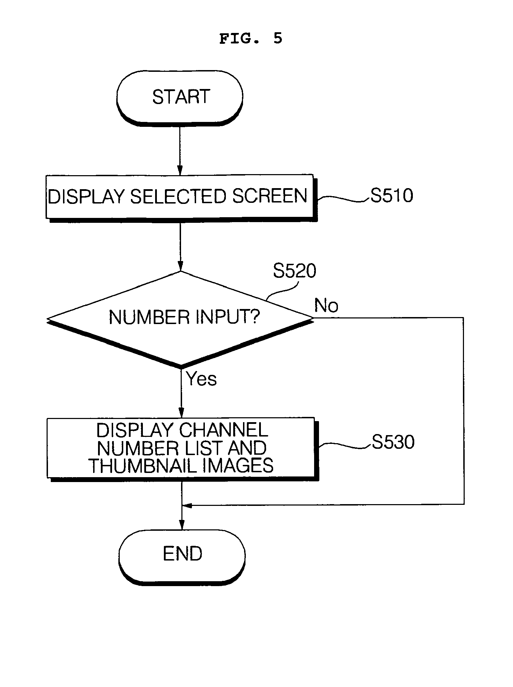

FIG. 5 is a flowchart illustrating a method for operating the image display apparatus according to an exemplary embodiment of the present invention.

Referring to FIG. 5, a selected screen is displayed on the display 180 in step S510. The selected screen may be a menu screen, a broadcast screen, a screen displaying played multimedia, an external input screen, a Webpage screen, etc.

If a number input is received while the selected screen is displayed in step S520, a thumbnail image screen is displayed on the display 180, including a list of channel numbers each including the input number and thumbnail images of channels having the channel numbers in step S530.

In terrestrial digital broadcasting, for example, if a major number of 9 and a minor number of 1 are assigned to a channel, channel '9-1' is displayed to a user. For example, analog and digital terrestrial channel numbers for Korean Broadcasting System (KBS) are 9 and 9-1, respectively. Considering even analog and digital cable channels for KBS, KBS may be represented by a plurality of channel numbers each including '9'. As the number of channels increases, such channel numbers as 91 may be detected as similar to channels having channel numbers each including 9. In this case, the user may have difficulty in switching to a channel by inputting a channel number because the user cannot easily identify digital broadcast channels or analog broadcast channels and remember channel numbers.

In this context, upon receipt of a number input, a list of similar channel numbers and thumbnail images of channels having the similar channel numbers are provided to the user, thus increasing convenience.

For example, if the user enters '1', a list of channel numbers each including '1' such as 10-0, 10-1, 11-1, etc. and thumbnail images of channels having the channel numbers are displayed. Therefore, the user can identify the contents of broadcast programs readily.

Even when the user does not know the number of a channel that he or she wishes to view, the user can select the channel conveniently because broadcast information such as the contents of broadcast programs is provided to the user. If the user wants to view channel 11-1, the user has only to input one digit '1' without the need for inputting the entire number '11-1'. Then a list of channel numbers each including '1' is displayed and the user selects one of the channel numbers. Hence, the number of key inputs of the user is decreased.

A thumbnail image screen including a channel number list and thumbnail images of channels having channel numbers included in the channel number list may be displayed on a part of the display 180.

In addition, the thumbnail image screen may be designed to include a scroll bar and display only a part of the channel number list, such that the remaining part of the channel number list is displayed by moving the scroll bar. The user may set the number of channel numbers to be displayed on a screen.

Thumbnail images based on broadcast video signals of received channels may be thumbnail images based on broadcast video signals of pre-stored channels. That is, broadcast channels previously stored by the channel add function may be received through the second tuner 125, thumbnail images may be generated based on broadcast signals of the stored broadcast channels, and then displayed on the display 180. Therefore, thumbnail images of channels with channel numbers including an input number may be selected out of the thumbnail images of the previously stored channels and displayed along with a list of the channel numbers each including the input number.

In addition, while the thumbnail image screen is displayed on the display 180, a screen including an updated thumbnail image of at least one of the displayed thumbnail images may be displayed on the display 180 or at least one of the displayed thumbnail images may be updated in the displayed thumbnail image screen. The update may be periodic or random, and the thumbnail images may be updated wholly or partially. The updated thumbnail images are based on images updated by the afore-described channel browsing processor 170.

The displayed thumbnail images may be still images or moving pictures. Currently received images or pre-stored images may be displayed as the thumbnail images.

The thumbnail images may be images that have been processed and extracted by the channel browsing processor 170.

In the thumbnail image screen, the channel number list and the thumbnail images may be displayed separately, or overlapped with each other.

Thereafter, upon input of a selection command to select one of a plurality of channel numbers displayed on the display 180, an input image of a channel having the selected channel number is displayed on the display 180.

Before the selection command is generated, one of the channel numbers and the thumbnail images may be focused upon. For example, when a focus command to focus on one of the channel numbers and the thumbnail images is input, a channel number or a thumbnail image corresponding to the focus command may be focused upon. The focus command may be generated through manipulation of a directional key of the remote controller or a pointer input of the pointing device. A thumbnail image may be focused upon by at least one of indicating the thumbnail image with a cursor, highlighting the thumbnail image, or zooming in on the thumbnail image. When the focused thumbnail image is moved by a directional key input or a pointer input, the thumbnail image may be continuously displayed during the movement.

Upon input of an edit command while the thumbnail image screen is displayed on the display 180, the displayed thumbnail images may be edited.

For example, upon input of an edit command while one of the displayed thumbnail images is being focused upon, the focused thumbnail image may be edited. The editing of the focused thumbnail image may include 'save as favorite', 'delete setting', 'lock setting', etc.

If an information view command is received for a channel number in the channel number list, detailed program information about a channel having the channel number may be displayed. The program information may include at least one of the channel number, a program title, program time information, or thumbnail images extracted at a plurality of different times.

The above-described method for operating an image display apparatus may be performed in a similar manner when any other type of channel number list is displayed. In accordance with an exemplary embodiment of the present invention, the method for operating an image display apparatus includes displaying a selected screen on a display and, upon input of a command to view favorite channel numbers, previous channel numbers, or an EPG, displaying a screen including a channel number list and thumbnail images of channels having channel numbers listed in the channel number list.

It takes considerable time for a user to switch to a channel that he or she wishes to view from among broadcast channels, which have been greatly increased in number due to the transition to digital broadcasting. Therefore, image display apparatuses provide a favorite channel view function and a previous (previously viewed) channel view function. The favorite channel number view function or the previous channel number view function facilitates rapid selection of a desired channel from among favorite channels or previously viewed channels. As thumbnail images of the favorite channels or the previously viewed channels are displayed along with the list of favorite channel numbers or previously viewed channel numbers, the user can switch to a broadcast program that he or she wishes to view more accurately and more easily.

More specifically, when a command requesting a list of channel numbers or information including the channel number list is received, such as a favorite channel view command, a previous channel number view command or an EPG view command, a thumbnail image screen including the requested channel number list and thumbnail images of channels having channel numbers included in the channel number list is displayed on the display. Therefore, the user can readily identify images played on broadcast channels.

In the thumbnail image screen, the channel number list and the thumbnail images may be displayed separately, or overlapped with each other. Upon receipt of an information view command for a channel number in the channel number list, program information may further be displayed, inclusive of at least one of the channel number, a program title, program time information, or thumbnail images extracted at a plurality of times.

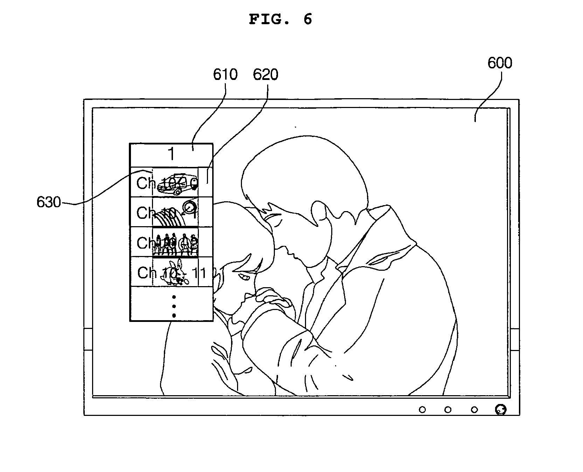

FIGS. 6 to 9 illustrate various examples of screens displayed on a display in the method for operating an image display apparatus according to the exemplary embodiment of the present invention.

Referring to FIG. 6, upon receipt of a number input while a selected screen 600, for example, an over-the-air broadcast video screen is displayed on the display, the controller controls display of a thumbnail image screen including channel numbers 620 and thumbnail images 630 of channels having the channel numbers 620 on the display. A number input window 610 may further be displayed to allow a user to enter a number.

While the size of each of the thumbnail images 630 may vary depending on settings, it is preferable to display the thumbnail images 630 at a small size at first and, upon input of a selection command or a focus command for a thumbnail image, to enlarge the thumbnail image, in order to accommodate an increased number of channels and prevent the user from being distracted from a broadcast program that he or she is watching.

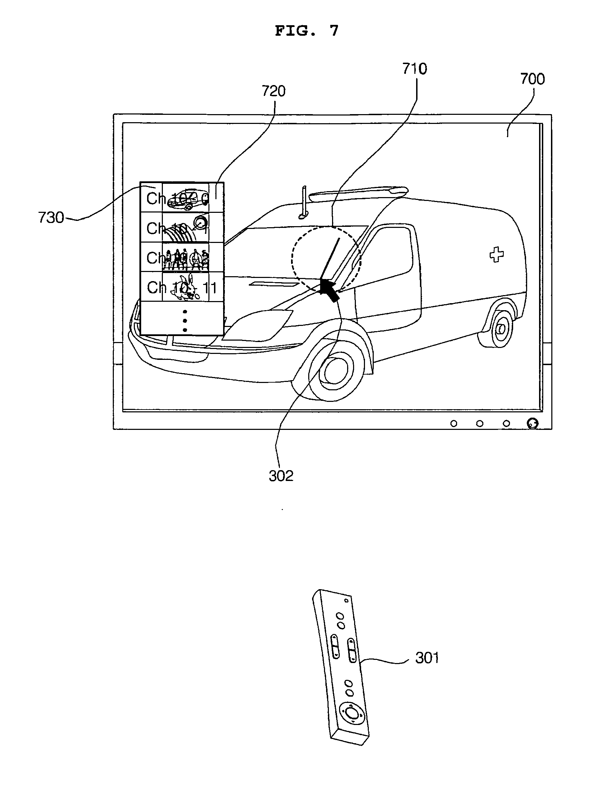

An exemplary embodiment illustrated in FIG. 7 is similar to that illustrated in FIG. 6, except that a number is input by moving a pointing device.

Referring to FIG. 7, a screen 700 and a pointer 302 corresponding to a pointing signal received from the remote controller 301 are displayed on the display of the image display apparatus. When a directional pointing signal is received, a trajectory 710 of the pointing signal is displayed at coordinates calculated from the pointing signal. The pointer 302 may be displayed together with the trajectory 701.

If the trajectory 701 is recognized as representing number '1' according to a number recognition rule, channel numbers each including '1' are included in a channel number list 720. Thumbnail images of channels having the channel numbers are also displayed. Thus, the user can readily identify the contents of broadcast programs played on the channels.

If the trajectory 710 is recognized as representing a full channel number '14-1' within a predetermined time, a channel having the channel number '14-1' may be immediately switched to and thus an image played on channel '14-1' may be displayed on the display.

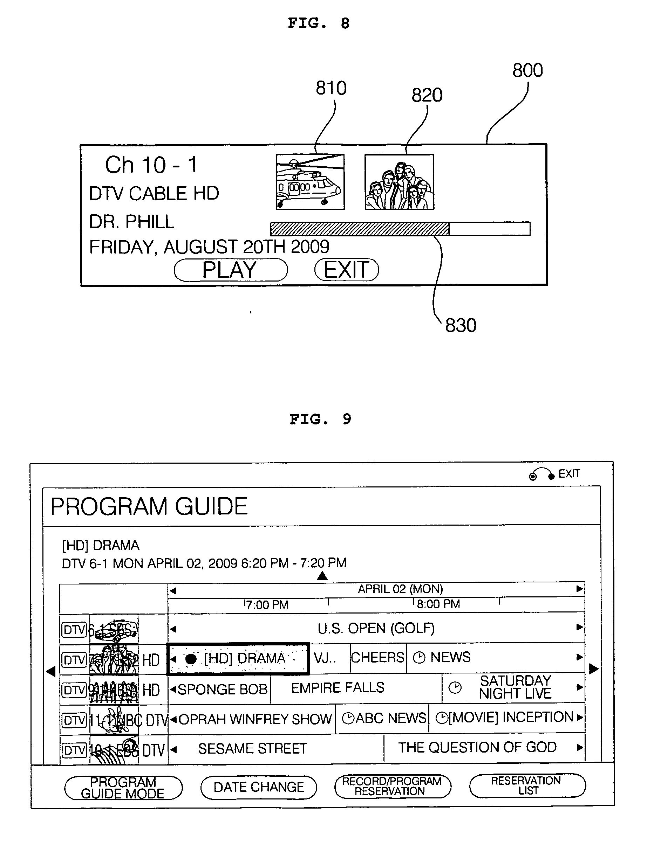

FIG. 8 illustrates detailed program information about a channel, when an information view command is received for the channel number of the channel in a channel number list. Referring to FIG. 8, program information 800 may include at least one of the channel number, a program title, program time information, or a plurality of thumbnail images 810 and 820 extracted at different times.

As illustrated in FIG. 8, the thumbnail images 810 and 820 of the channel may be displayed separately or partially overlapped. The thumbnail images 810 and 820 may have information about the times at which they were extracted or may be arranged in a time order. A progress bar 830 may indicate the progress of an on-going program.

FIG. 9 illustrates a screen displayed on the display, including a channel number list and thumbnail images of channels having channel numbers listed in the channel number list, when an EPG view command is received.

As a thumbnail image is displayed in the background of each channel number, the user can readily identify the contents of a broadcast program currently airing on a channel corresponding to the channel number. The thumbnail image may be updated repeatedly so as to provide the user with up-to-date broadcast information about the channel.

As is apparent from the above description of the present invention, since a channel number list is displayed along with thumbnail images of channels having channel numbers included in the channel list on a screen, a user can readily identify broadcast videos played on the channels and thus easily select a desired broadcast program and video. In addition, the thumbnail images are repeatedly updated to thereby provide up-to-date information about the channels to the user. If the thumbnail images are updated sufficiently frequently the user can identify contents of the channels in almost real time. Therefore, the user can look over the channels before selecting one of the channels.

Upon receipt of a number input, a list of similar channel numbers each including the input number is displayed along with thumbnail images of channels having the similar channel numbers. Accordingly, the user can identify programs airing on the channels easily and various user interfaces can be used.

The image display apparatus and the operation method therefor according to the foregoing exemplary embodiments are not restricted to the exemplary embodiments set forth herein. Therefore, variations and combinations of the exemplary embodiments set forth herein may fall within the scope of the present invention.

The method for operating an image display apparatus according to the foregoing exemplary embodiments may be implemented as code that can be written to a computer-readable recording medium and can thus be read by a processor. The computer-readable recording medium may be any type of recording device in which data can be stored in a computer-readable manner. Examples of the computer-readable recording medium include a ROM, a RAM, a CD-ROM, a magnetic tape, a floppy disc, an optical data storage, and a carrier wave (e.g., data transmission through the Internet). The computer-readable recording medium can be distributed over a plurality of computer systems connected to a network so that computer-readable code is written thereto and executed therefrom in a decentralized manner. Functional programs, code, and code segments needed for realizing the embodiments herein can be construed by one of ordinary skill in the art.

While the present invention has been particularly shown and described with reference to exemplary embodiments thereof, it will be understood by those of ordinary skill in the art that various changes in form and details may be made therein without departing from the spirit and scope of the present invention as defined by the following claims.

## Claims

1. A method for operating an image display apparatus, comprising:
displaying a selected screen on a display; and
displaying at least one of:
upon receipt of a number input, a screen including a list of channel numbers each including the input number and thumbnail images of channels having the channel numbers on the display; and
upon receipt of a favorite channel view command, a previous channel view command, or an Electronic Program Guide (EPG) view command, a screen including a channel number list and thumbnail images of channels having channel numbers included in the channel number list on the display.

2. The method according to claim 1, wherein the thumbnail images are based on broadcast video signals of previously stored channels.

3. The method according to claim 1 or 2, further comprising displaying a screen including an updated thumbnail image of at least one of the thumbnail images on the display.

4. The method according to any one of claims 1 to 3, wherein the channel number list is overlapped with the thumbnail images in the screen including the channel number list and the thumbnail images.

5. The method according to any one of claims 1 to 4, wherein the screen including the channel number list and the thumbnail images is displayed on a part of the display.

6. The method according to any one of claims 1 to 5, further comprising, upon input of an information view command for a channel number in the channel number list, displaying program information about a channel having the channel number.

7. The method according to claim 6, wherein the program information includes at least one of the channel number, a program title, program time information, or thumbnail images extracted at a plurality of times.

8. An image display apparatus comprising:
a display for displaying a selected screen;
a tuner unit for receiving a broadcast signal of a selected channel or broadcast signals of previously stored channels; and
a controller for, upon receipt of a number input, controlling display of a screen on the display, the screen including a list of channel numbers each including the input number among channel numbers of the previously stored channels on which the broadcast signals are received, and thumbnail images of channels having the channel numbers.

9. The image display apparatus according to claim 8, wherein the tuner unit comprises:
a first tuner for receiving the broadcast signal of the selected channel; and
a second tuner for receiving the broadcast signals of the previously stored channels.

10. The image display apparatus according to claim 8 or 9, wherein the controller controls display of a screen including thumbnail images updated from at least one of the thumbnail images on the display.

11. The image display apparatus according to any one of claims 8 to 10,
wherein upon receipt of an information view command for a channel number in the channel number list, the controller controls display of program information about a channel having the channel number on the display.

12. The image display apparatus according to any one of claims 8 to 11, further comprising a channel browsing processor for extracting the thumbnail images.

13. The image display apparatus according to any one of claims 8 to 12,
wherein upon receipt of a favorite channel number view command, a previous channel number view command, or an Electronic Program Guide (EPG) command, the controller controls display of a screen on the display, the screen including a channel number list and thumbnail images of channels having channel numbers included in the channel number list.

14. The image display apparatus according to any one of claims 8 to 13,
wherein the controller controls display of the channel number list and the thumbnail images in an overlapped fashion.
